# EUROPEAN PATENT SPECIFICATION

(11) **EP 1 713 008 B1**
(45) Date of publication and mention of the grant of the patent: **13.03.2013**
(21) Application number: 05021973.2
(22) Date of filing: 08.10.2005
(51) Int. Cl.: G06F 17/30

(54) **Method and system for preserving access to deleted and overwritten documents by means of a system recycle bin**
Methode und System zum Aufrechterhalten des Zugriffes auf gelöschte und überschriebene Dokumente mittels eines System-Papierkorbs
Procédé et système pour la préservation d'accès aux documents effacés ou écrasés au moyen d'une boîte à ordures du système

(30) Priority: 16.05.2005 CA 2506756; 22.09.2005 GB 0519365; 14.04.2005 CA 2504070
(43) Date of publication of application: 18.10.2006
(73) Proprietor: Kapur, Rajesh, Maltby, Nr Rotherham S. Yorkshire S66 8QF (GB)
(72) Inventor: Kapur, Rajesh, Maltby, Nr Rotherham S. Yorkshire S66 8QF (GB)
(74) Representative: Fulton, David James

(56) References cited:
- EP-A- 1 091 299
- US-A- 5 940 830
- US-A- 6 029 160
- US-A1- 2005 044 089
- US-B1- 6 330 573
- US-B1- 6 560 613
- "SEYBOLD REPORT ON PUBLISHING SYSTEMS, Volume 23, No. 7, 1 December 1993, M. WALTER, Documentum: Open Approach to Automating Workflow and Management of Long Documents" INTERNET CITATION, [Online] 1996, XP002988504 Retrieved from the Internet: URL:http://www.seyboldreports.com/SRPS/fre e/Ops23/P2307.HTM#I1>
- ANONYMOUS: "Simplify and Consolidate Enterprise Communications and Information with Oracle Collaboration Suite" ORACLE TECHNICAL WHITE PAPER, February 2003 (2003-02), pages 1-13, XP002309938

## Description

### Field of Invention

The present invention relates to a method, system, for storing, preserving access and retrieving documents and associated metadata in a Document Management system in regards to both the delete and or overwrite of a Document version. It also relates to the storage preservation of access and retrieval of documents deleted, archiving of documents, and associated metadata to disk storage and/or to add these documents and associated metadata to a secondary archive document management system.

### Background of the Invention

The present invention also relates to a method and system for capturing and recovering documents or versions of intentionally or unintentionally deleted and or overwritten within a document management system.

### References

US-A-6 029 160 (CABRERA LUIS FELIPE [US] ET AL) 22 February 2000 Does not distinguish between deletes and overwrites but classifies everything as deletes. US-B1-6 330 573 (SALISBURY MICHAEL P [US] ET AL) 11 December 2001 Creates a catch all but only for a short period of time, In other words no separation or storage. 'A Soft Delete'

SEYBOLD REPORT ON PUBLISHING SYSTEMS Volume 23, no. 7 1st December 1993 M.Walter Documentum : Open Approach to Automating Workflow and Management of Long Documents.

Illustrates the system that is referred to as an prime example where the method and system in this application can be implemented.

ANONYMOUS: "Simplify and Consolidate Enterprise Communications and Information with Oracle Collaboration Suite "Oracle Technical White Paper February 2003.

Identifies the flaw , but does not provide any solution nor the realisation that it is the metadata associated with the content where the flaw lies and not the content primarily. EP-A1 091 299 (WILD FILE INC [US]) 11TH April 2001

Solves the problem of caching in an operating system recovery by use of before overwrite and new value. IT doesn't deal with the deleted data due to the fact that it doesn't need to return deleted on a system recovery and hence doesn't classify there are both deletes and overwrites, treating everything as a overwrite.

### Background of the invention

Many large companies use document management software to provide a streamlined and efficient way of managing day to day business activities. The purpose of the software is to help companies keep track of large volumes of documents in an organised way. Thus, the documents can be easily stored, found and retrieved. In some cases, there may be more than one version of a particular document. In these circumstances, version control is an issue of particular importance. Version control is an aspect of most document management systems that enables different people to have shared access to a document. In addition to having shared access, the individuals have a right to individually modify the shared documents.

As an example, document management software may be used in a large engineering company that has many versions of the same part. When a part is ordered by a client, the correct part version needs to be found by the engineering company.

Document management systems typically include a system database associated with a filestore. The filestore stores actual documents while the system database stores reference information that points to the document within the filestore. The system database also typically stores supplementary document information regarding each document (such as lifecycle, workflow, permissions, attributes stored against etc..). The system also has the concept of object inheritance in regards to documents stored so a document could be of type letter, or of type engineering, both inherited from a standard document, in many cases the document under consideration has different attributes or metadata attached to it depending on what type of document is being considered.

Documentum^{™} is an example of a document management system that comprises three different layers (or technologies) located on top of a server based operating system such as Unix^{™} or Windows 2000^{™}, a system database, and a filestore.

The Documentum^{™} layers are located on top of a database and the layers serve Documentum^{™} client interfaces. The reference information (i.e. the information pointing to the physical document data) and the supplementary document information (i.e. the attributes of the types of the documents stored, and any metadata associated) are stored in the database. The actual physical data is stored in a filestore on either the server, a Storage Area Network (SAN) or filer pointed to by the server.

As part of the management of a document management system, the system database and filestore continue to grow in size. This is positive and desirable for the business as a whole as the company's data is kept safe. From time to time documents are in the normal course of events deleted from the system database and filestore, or a particular version of the document gets deleted, when it is overwritten the user storing the new document as the same version. However, in some cases the deleting or overwriting of a document gets done in error, with valuable information within the document or the previous version thereof being lost in the process. When this happens it is desirable for the user to be able to get his original document back. However, often, by the time the user realises that he needs his original document back; the document management system has run a standard clean up routine that makes it effectively impossible to retrieve the deleted or overwritten file. Clean up routines are required because if the system database is not cleaned up every so often inconsistencies can arise in the system database information, which can also lead to corruption of the system. A second, scenario also exists, in that, in some cases the amount of data in this Document Management system continues to grow. Now, at other times, it would be advantageous, to be able to delete old version, or hive off data , as systems seem to grow and grow, backups even start to take hours and sometimes days this affects the availability of the system and is generally undesirable when attempting to a keep business going.

There is no current known method which allows a authorised user a method, system to recover both the documents that get mistakenly or maliciously deleted or overwritten or in the case of housekeeping to allow intentional deletion of files in order to hive off or archive data to either a traditional storage device or to a secondary disk media (i.e. disk drive, backup tapes and or a secondary filestore etc....) and or to a secondary archive system on request, the file recoverable at a later point back to the primary system if required.

A deleted document refers to any or all versions of a document selected to be deleted, it is important to note here that the physical file is not deleted in the first case, but certain metadata associated with the representation or image of the file get removed by clean up jobs.

A overwritten document refers to a user "checking out" the document and saving the document as the same version (thereby losing the previous content of the document) checking in by accident or by design as the same version of the document as the document that is being modified, thereby the prior document, is overwritten. Sometimes this prior work is still required, especially if the document is being worked on by two people and one person looses his work because a second person removes a clause, or, the part is slightly different in a new model of car. If the process is completely reversed the new document can be lost. The user therefore has the option through this invention to return the document as a new document of the same name, or indeed to replace the document that replaced it.

A Document within a Document Management System is based on both a metadata representation and an actual physical file component.

It is an object of the present invention to provide a mechanism to trap , record, store and recover to the original system, or secondary system (document management system) on request, the document and associated metadata whether the file was unintentionally deleted or overwritten or intentionally deleted for archive purposes on user request.

According to one aspect of the present invention, there is provided a method performed in a computer for recycling deleted or overwritten document data within a system, as defined in claim 1.

The invention has the advantages that the documents and versions of that are intentionally or unintentionally deleted can on requirement be recycled and returned to the authorised user, together with any salient information stored against that document if required. The information could also be hived of to storage media or inputted into a second archive/ delete system. Document management systems are fairly recent and do not have this facility.

According to another aspect the present invention provides a document management system corresponding to the method of the previous aspect and as defined in claim 9.

According to further aspects of the present invention there is provided computer program code, optionally provided on storage medium, which when loaded onto a computer will cause the computer to perform the method or to function as a system in accordance with the method or system of preceding aspects.

Preferably, the reference data is contained within system tables in the system database, and wherein the method comprises using a recording step which comprises the step of recording reference data from the system tables. Preferably, the system in response to a delete/overwrite command deletes reference data from some system tables and updates reference data to other tables.

Preferably, the system comprises of a Documentum document management system. Preferably, the system, in response to a delete/overwrite command, deletes core reference data from first and second system tables and updates reference data from a third system table. Preferably, the system comprises a Documentum document management system, and wherein the first system table comprises a dm_sysobject_stable, the second system table comprises a dm_sysobject_r table, and the third table comprises a dmr_content_r table.

Preferably, the parent identification can be joined to a fourth table which points to the document data in the system filestore. Preferably, the system comprises a Documentum document management system and wherein the fourth table comprises a dmr_content_s table

Preferably, the recording step comprises using a database trigger. Preferably, the recording step comprises recording the reference data using at least one Oracle trigger. Preferably, the main recording step comprises recording the reference data using a first Oracle trigger associated with the first table, a second Oracle trigger associated with the second table, and a third Oracle trigger associated with the third table.

Preferably, for the first set of access-preservation tables, the set comprises a first access-preservation table to receive reference data recorded from the first system table, a second access-preservation table to receive reference data recorded from the second system table, and a third access preservation table to receive reference data recorded from the third system table, together with a date timestamp.

Preferably, the recording step used for obtaining information into the second set of access-preservation tables includes, using database triggers and SQL commands. Preferably, the recording step used for obtaining information into the second set of access-preservation tables includes, using Oracle triggers and Oracle SQL commands.

Preferably, the method comprises keeping a record of the recording process with regards to recording reference data in each of the system tables concerned, and for especially in regard to each document being deleted and/or overwritten at a later stage. Preferably, the recording steps to gain the supplementary data and recording process comprise recording prior to the system executing a method that cleans the system tables to prevent access to supplementary document information for deleted/overwritten documents from the system tables.

Preferably, a subset of the supplementary document information is also combined into combination tables using data recorded in the first set of access preservation tables this includes, but is not limited to information selected from the following group: a name of the document deleted or overwritten, a folder within the system database from which the document was deleted or overwritten, a storage identification of the deleted/overwritten document that indicates the position of storage within the filestore, a parent identification of the deleted/overwritten document to permit checking of the document path within the filestore, an object identification to provide filestore path information, a type of object that was deleted/overwritten, a version of the deleted/overwritten document and a date timestamp that the document was deleted/overwritten.

Preferably, the system comprises a Documentum document management system, and wherein the clean method is carried out by a dm_clean routine. Preferably, the method further comprises the physical file path and file on the filestore being calculated and copied to a safe location, and prior to another documentum job to clean the filestore.

Preferably, this safe location is an empty storage area with a similar path in another drive location. Preferably, this safe location is updated into the combination tables. Preferably, the method comprises that on a request for a lost document; the information can be inserted, updated back into the original database system tables, through a manual method. Preferably, the manual method comprises using the combination tables to determine relevant data required by the user.

Preferably, the relevant data required is used as an input into at least one database stored procedure which references the first and second set of access preservation tables and combination table. Preferably, the relevant data required is used as a input into two database stored procedures, one for re-inserting information regarding the recycling of a deleted document, the second for inserting information regarding the recycling of an overwritten document. Preferably, the first of these procedures to carry out SQL commands to all the database system tables required, with the reference data prior to the delete of the document, depending upon user input recycling either a single version, or all versions of a document.

Preferably the second of these procedures to carry out SQL commands to all the database system tables required, with the reference data prior to the overwrite of the document, depending upon user input, recycling either as a completely new document, or the 'new' current version of the document in the system. Preferably, the method also comprises copying the physical file back from the storage delete filestore to the main filestore.

Preferably, method comprises the viewing the combination tables to select the relevant document deleted or overwritten required to be re-inserted through some control software. Preferably, the control software, takes as input, the object identified in the combination tables, the user option and uses two database stored procedures to access the information in the first, second set of access preservation tables and combination tables to restore the before delete /overwrite reference information to the relevant system tables. Preferably, the control software also issues a command which copies the file in the deleted files filestore back to the system filestore.

Preferably, the control software has a user friendly interface. Preferably, the control software is written in Visual Basic. Preferably, the recording, inserting, updating and providing steps are executed by the execution of Oracle software code. Preferably, the recording, inserting, updating and providing steps are executed by the execution of SQL Server software code.

Embodiments of the invention will hereinafter be described, with reference to the accompanying drawing, in which:

### Drawings

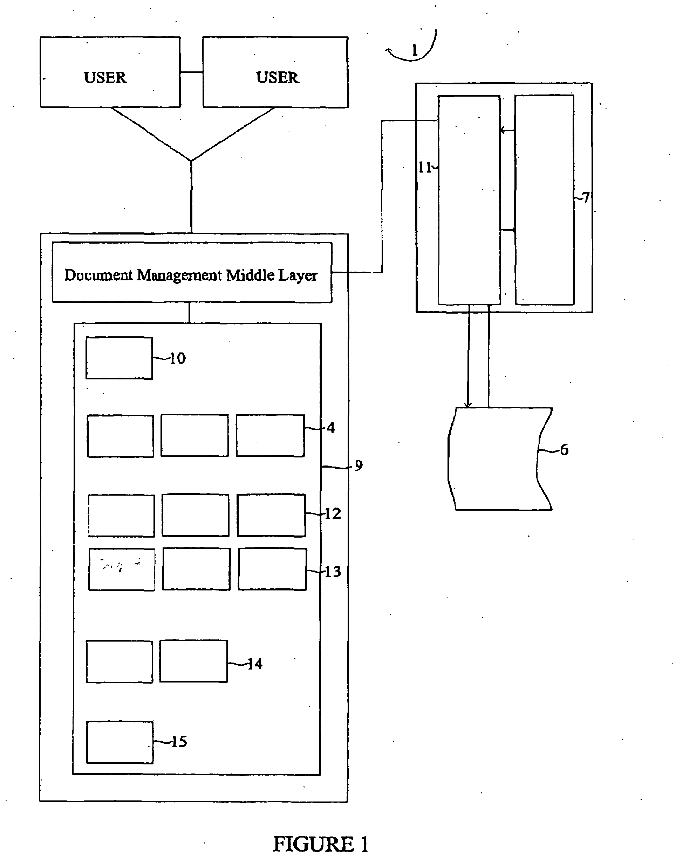

Figure 1 is a schematic diagram of a system describing a document management system encompassing a system recycle bin according to a first embodiment of the present invention which allows the capture and on user request return of relevant reference and document data at the exact time it is inserted, deleted or updated.

### Description Of The Invention

The system 1 is made up of a system database 9 including a number of system tables 10 and a filestore 11. The actual physical data, i.e. the document data files themselves are stored in the filestore 11, in this case shown as a storage area network (SAN). Reference information about the data stored in the filestore, i.e. information pointing to the physical document data and supplementary document information, i.e**.** the attributes of the types of documents stored are stored in the system database 9. The data sent to the system tables 10 is in the form of Metadata.

As is known from conventional databases and document management systems are similar, metadata contains information sufficient to enable a system to identify each file stored in the filestore 11 sufficiently to enable authorised personnel to retrieve, protect and carry out the disposition of the files in the filestore 11. This information may include items such as: place of origin, file code/identification, a key for retrieval of the physical file etc. Each time a file is edited, metadata is generated. The metadata is used to update information in the system tables 10 corresponding to the file held in the system database. Therefore, if a document is added, updated or deleted, the metadata will provide information of this to the system database of the system 1 to enable the changes to be made.

The system database 9 shown comprises a system table 10 representing one such system table of many, newly added access preservation tables 12 and 13 to store transaction information , database procedures 14 to implement logic programs and the database triggers 4 recording transactions e.g. update, delete and insert, and a combination transaction table 15. Also depicted is a storage media 6 and a secondary empty filestore 7.

In one embodiment triggers 4 are added to the relevant Documentum tables 10 for the Documentum Document Management System and they automatically fire to capture the salient information needed to retrieve the pointer information to the physical data for the file by running a couple of oracle stored procedures or sql command statements, to a first set of core access-preservation tables 12. The first set of access preservation tables 12 can be populated in a number of ways depending on the data stored one such embodiment for the documentum system uses the dm_sysobject_s table to obtain the core reference information including the parent information and so the parent information does not need to be obtained from the dmr_content_r table. In an alternative embodiment which can also be used to capture the core reference information described in co-pending Patent Application GB 0516374.6, CA 2,504,070 the dmr_content_r table is used to obtain the Parent information.

The second set of access preservation tables 13 are filled by means of triggers 4 attached to the documentum tables with all other salient information concerning the deleted object (e.g. a record of the reference data in dmr_content_s for each document/object that is deleted, the type information etc). This information is stored in secondary access preservation tables, prior to the dm _clean job. The information in the dmr_content_s table, for example is not deleted, or updated when an object is deleted; however, this is information that could be lost once dm_clean is run. Should it become necessary to restore the object data in the system tables to the state prior to the data being deleted, then the lost information in dmr_content_s needs to be present once more.

A typical Documentum system database has a number of system tables that store reference information and supplementary document information. These tables include (but are not typically limited to) the dm_sysobject_s table (first table), which stores object IDs for the documents; the dm_sysobject_r table (second table) which stores, *inter alia,* version IDs for documents; the dmr_content_r table (third table) which stores, *inter alia,* parent ID needed to find the pointer to the document within the filestore; and the dmr_content_s table (fourth table), which stores an r_object_ID that, together with the parent_ID, determines the pointer to the location of the document within the filestore.

According to one embodiment of the invention when a document is deleted/overwritten, the relevant reference core data from the first two tables is deleted, and the relevant core reference data from the third table (the parent ID) is updated to a Null.

According to this embodiment of the invention, at least one, and preferably three core Oracle triggers are used to catch and record the core reference data that was deleted and/or updated to the core first set of access-preservation tables.

This reference data is then inserted into the first set of access-preservation tables (preferably one corresponding to each of the first three system tables), and the access-preservation data combined with a fourth system table to provide a combination table 15 having the salient information to calculate the deleted/overwritten document within the filestore.

All reference data and supplementary reference data apart from the core data above that is required to "recycle" the document on user request is inserted into a second set of access preservation tables; using database triggers, and Sql commands or stored procedures containing the sql commands. This step can be performed each night, but must be performed before dm_clean is run.

The document in the filestore is calculated and copied to a purpose built initially empty delete filestore for later retrieval and the location stored is updated in the combination table 15.

The method preferably further comprises the step of combining the access preservation tables and a subset of the supplementary document information into a set of at least one combined table. This step is preferably performed before the system executes a cleaning of the system tables, because at least some of the supplementary document information will not be available once a cleaning, such as a dm_clean routine, is run.

In one embodiment, the reference data from the first access preservation tables is used to obtain supplementary document information, related to the deleted/overwritten document, from the system tables to fill combination tables to help the user identify the document required to be retrieved. The core supplementary document information preferably includes, but is not limited to a name of the document deleted or overwritten, a folder within the system database from which the document was deleted or overwritten, a storage identification of the deleted/overwritten document that indicates the position of storage within the filestore, a parent identification of the deleted/overwritten document to permit checking of the document path within the filestore, an object identification to provide filestore path information, a type of object that was deleted/overwritten, a version of the deleted/overwritten document and a date that the document was deleted/overwritten.

The method preferably further comprises the step of recording and preserving all before information in the said system tables and all related system tables using oracle triggers and sql commands within database procedures with regards to each deleted/overwritten object together with a date timestamp into a secondary set of access-preservation tables.

The triggers on each table in the documentum database required also record the changes on update, insert, delete to access-preservation tables to a transaction table 15 for all changes on all tables.

So that this information can be restored using sql commands back into the system tables where necessary in reverse-order later if needed, thereby recycling it, this even after dm_clean runs (as data has been preserved in a second set of access-preservation tables).

The method also calculates the whereabouts of the file matching the deleted document on the filestore 11 and copies it to a safe location (secondary filestore 7) together with its full path, storing this location, so it can be returned if necessary to the original filestore 11, if the document is to be restored.

This invention captures the data and the information from the filestore 11 in a kind of a "system recycle bin". On request the data is re-input in reverse order to the database system tables, manipulating it where necessary depending on the user options chosen using the recorded timestamp. The filestore 11 re-populated with the necessary file.

The transactions made on the three core tables dm_sysobject_s, dm_sysobject_r, and dmr_content_r during delete of the file by the system commands can be reversed by Sql commands encapsulated within stored procedures. Furthermore a row added to dmr_content_s if subsequently found missing. Likewise all supplementary information can be restored.

Using the base option it will appear to the user that the file was never deleted, or overwritten (In the case of an overwritten document the user must be informed that the recycling of the overwritten document will replace the version of the document that overwrote it).

In an alternative embodiment extra options are provided which allow the user to retrieve the old document as the current version, or as a, totally new document, in order not to loose the document that overwrote the one the user requires. In this case the data retrieved from the set of access-preservation tables 12 and 13 is manipulated before adding it to the system database tables to provide the necessary result.

The latest version of a document is usually the current version in Documentum.

The method preferably comprises searching and viewing the information in the combination table, through a software interface which provides a Gui front-end. Upon selection of this information and retrieval option it would run database stored procedures that automatically restore the data within the database system tables and also copy over the file from the safe location back to the main filestore 11, using the transaction 15 and access preservation tables 12, 13.

In one embodiment, the data location within the filestore 11 at which a document is located is obtained by combining the parent ID from the third table with the r_object_ID from the fourth table to obtain the data ticket (i.e. the pointer) along with the storage ID which can be used to find the file path of the document on the filestore.

This pointer information can then be translated through commonly available Documentum support notes. The Data Ticket and the storage_id (pointer info) are two pieces of data that need to be obtained to help retrieve the document's physical file. The other information required is the r_object_id and the parent_id.

The actual path and filename are typically encrypted within the filestore to protect the document from unauthorized access. To decrypt, support note 310 is used and the parent_id taken from the combination tables described further below; before dm_clean is run, the parent ID is plugged into the Documentum APIs shown on the note through the API interface in Documentum Administrator For example:
- apply,c, 090106d450cgbs3b, GET_PATH
- next,c,q0
- get,c,q0,result

This gives you the path of the file on the content store (but only works before dm_clean is run).

As described below, another Documentum support note can also be used to calculate the full file path and name of the document stored on the server. This is done using the r_object_id, storage_id and Data_ticket (all values contained in the combination tables This alternate calculation of the file path and name can be compared with the above calculation using note 310 to increase the probability that the correct file path and name are known. Once dm_clean has been run, the note 310 calculation will not work, but the alternate calculation will function to find the exact place on the server or backup tape at which a deleted file resides. The method of the present invention can then be used from the time of successful comparison of the two name and path calculations. i.e. by running the procedures below automatically through either a Cron / or Veritas job.

When an object or document is deleted or overwritten, the parent_id of the document is updated and set to NulL Once this occurs there is no way to link the dmr_content_r table to the dmr_content_s s table. The purpose of the recording of reference information was, *inter alia,* to ensure that the parent ID was recorded in order to get storage location and data ticket.

Below, there is shown sample code implementing a small portion of the invention, more columns of data are required than those shown if the document is to be recycled. A column of data in this case would represent in the case of the dm_sysobject_s the r_object_id, object_type i.e. the info contained within. The code shows the process of recording the data from the core tables.

On reversing the process the whole row of data within the dmr_content_r table it appears that the value of the parent_ID set to Null would have to be placed back, however, the whole row may be missing especially after the dm_clean method has run and have to be re-inserted entirely using an insert statement.

Code is given for both Oracle and SQL Server (For Delete is for older versions). The invention can be implemented in a multi-document management system embodiment. The invention can be implemented in a multi-database embodiment.

```
  Oracle
  create or replace trigger capture_del_s_trigger
  before delete on dm_sysobject_s
  for each row
  Begin
  kapurture_del_s(:old.r_object_id,:old.r_object_type,:old.object_name);
  EXCEPTION
  when others then
  RAISE;
    END
    create or replace trigger capture_i_trigger
    before update on dmr_content_r
    for each row
    Begin
    kapurture_del_i(:old.r_object_id,:old.parent_id);
    EXCEPTION
    When others then
    RAISE;
    END;
   /
    Create or replace trigger capture_del_r_trigger
   before delete on dm_sysobject_r
   for each row
   Begin
   kapurture_del_rt:old.r_object_id,:old.r_version_label,:old.i_folder_id);
   EXCEPTION
   when others then
   RAISE;
   END;
   / then Sql Server:-
   create trigger After Delete - FOR Delete
   As
   if exists (insert into capture_del_r_table values (r_object_id, r_version_label,
   i_folder_id)
   select r_object_id, r_version_label, i_folder_id from deleted where
   r_object_id in (select r_object_id from deleted)
   go
  create trigger capture_i_triggeron dbo.dmr_content_r
  After Update - FOR Update
  as
  if exists (insert into capture_i_table values (r_object_id, parent_id)
  select r_object_id, parent_id from deleted where
  r_object_id in (select r_object_id from deleted)
  )go
  create trigger capture_del_s_trigger
  on dbo.dm_sysobject_s After Delete - FOR Delete
  as if exists (insert into capture_del_s_table values (r_object_id, r_object_type,
  object_name,date_saved)
 select r_object_id, r_object_type, object_name,getdate() from deleted where
  r_object_id in (select r_object_id from deleted)
   )
   go
```

In the dm_sysobject_s and dm_sysobject_r tables, a "before row delete" is preferably used, meaning the data is about to be deleted is captured. For the dmr_content_r table, a "before update row" is preferably used, meaning that the data to be updated is captured. This ensures that all salient and/or relevant information is captured.

It will be appreciated that an "after row delete" and "after row update" could also be used and are comprehended by the invention. In such a case, the old values are captured immediately upon the deletion or update.

The reference data is trapped (i.e. recorded) and inserted into three tables (again these tables would need to be extended to capture all the columns for the purposes of re-cycling):-

```
   create table capture_i_table (r_object_id varchar2(16), parent_id varchar2(32),
   date_saved date)/
   create table capture_del_s_table (
  r_object_id varchar2(16),
  r_object_type varchar2(32),
  object_name varchar2(255),
  date_saved date)
  / create table capture_del_r_table (
  r_object_id varchar2(16),
  r_version_label varchar2(32),
  i_folder_id varchar2(16))
  /
```

More tables for extra data need to be added to these tables, together with a date timestamp, in order for the method to record the salient supplementary reference data from the system tables, in regards to "recycling" or restoring the document back into the system. The procedures, given the names RKapurture_del_data.plb and RKapurture_upd_data.plb, then are used to combine the three access-preservation tables with the dmr_content_s table to produce the combination tables and to get the all important data_ticket value which must be converted to a char using to_char(data_ticket) as well as combining other data.

Additionally, further oracle database stored procedures that reference the access-preservation tables, the combined tables are necessary to capture all the supplementary and reference information in the system tables before the method dm_clean runs into access-preservation tables.

Further procedures taking input parameters these being the object to restore and which option the user requires to restore the information captured, back to the database system tables that form the documentum document management system, using information stored in the transaction table.

The combination tables could take the form of a single table for both deletes and overwrites. However, it is preferred that there be a combination table for deletes and one for overwrites, (again these tables contain here only a subset of the columns to necessary to ensure recycling).

```
   create table capture_del_ro_table (
   date_deleted date,
   storage_id varchar2(16),
   data_ticket varchar2(20),
   full_format varchar2(64),
   r_object_id varchar2(16),
   r_object_type varchar2(32),
   object_name varchar2(255),
   r_version_ label varchar2(32),
   r_parent_id varchar2(32),
   r_folder_path varchar2(255))
   /
   create table capture_upd_ro_table (
   date_deleted date,
   storage_id varchar2(16),
   data_ticketvarchar2(20)),
   full_format varchar2(64),
  r_object_id varchar2(16),
  r_object_type varchar2(32),
  object_name varchar2(255),
  r_version_label varchar2(32),
  r_parent_id varchar2(32),
  r_folder_path varchar2(255))
  /
```

Once the storage_id , data_ticket, r_object_id, parent_id are available in the above tables the method of the present invention is preferably every night and just before dm_clean runs. This will ensure that all of the necessary reference data is captured.

The following is the "alternate" process referred to above for calculating the file path and name. Take the storage_id obtained and use it as the r_object_id into the table dm_store_s. This should give you the filestore concerned (there could be more than one filestore, which collectively act as the "filestore" for the document management system. The path of the filestore can be found through the Documentum administrator.

Part of the file path on the filestore is stored as a hex code. The first part of this hex code is usually contained within the r_object_id of the deleted row corresponding to the deleted document. The remainder of the filepath can be obtained by converting the data_ticket from dec to hex using the dword function on the standard scientific calculator on Microsoft windows, as the support notes will indicate.

For example if you have a data ticket say -2147561899 this converts into 75FECE55...i.e the path to the file could look something like this:
c:\filestore1\documentum\docbase_name\00\06d450\75\FE\CE\55 where 55 is the file name on the server and 0006d450 comes from the r_object_id.

Once the formula for the file paths has been worked out by comparing with the above API method then a plsql routine could even be written to give this automatically.

Once the path is known, the name of the file, the object it relates to and the date, the document that was deleted or overwritten can be retrieved from a copy filestore if it has been cleaned off the original filestore.

It will be appreciated that variations in, and modifications to the embodiments described and illustrated may be made within the scope of this application.

## Claims

1. A method performed in a computer for recycling deleted and/or overwritten document data within a system containing a system database storing supplementary document information, with system tables comprising core reference data pointing to the document data in a system filestore, the method comprising the steps of:
(a) determining that an insert, update, delete or overwrite command has been issued and recording the core reference data prior to the deleting or updating of the reference data by using at least one database trigger;
(b) providing at least a first and second set of access preservation tables;
(c) inserting the recorded core reference data into the first set of access-preservation tables, the recorded core reference data comprising, for the document, object identification data from a first system table, version identification table from a second system table and parent identification data from a third system table;
(d) using the core reference data from the first set of access preservation tables to obtain supplementary information related to the deleted and/or overwritten document from system tables together with a timestamp, the supplementary information including a record of the complete reference information for each system table that holds any information pertaining to the document data;
(e) inserting the supplementary information into a second set of access preservation tables;
(f) providing a set of combination tables and combining data from the first set of access-preservation tables and a subset of the supplementary information from the second set of access-preservation tables into two of the combination tables, one for deletes and one for overwrites, to point to the deleted and/or overwritten document data within the filestore;
(g) identifying and storing the document data deleted and/or overwritten to media or to a separate filestore, before a cleaning of the system tables is carried out; and
(h) on request of a user, automatically recycling the inserted, deleted and/or overwritten document data required by the user back to the system tables of the database and the system filestore and/or to a secondary archive system database and secondary archive filestore as necessary, depending on user requirements, to provide the document in the required way and version requested by the user.

2. The method according to claim 1, further comprising the step of manipulating the document data before recycling back to the database system tables.

3. The method according to claim 1, further comprising the step of storing all transaction and timing information to be referenced in at least one transaction table.

4. The method according to claim 3, further comprising the step of combining at least one access preservation table and the supplementary document information into the at least one transaction or combination table.

5. The method according to claim 4, further comprising storing, updating, or retrieving transaction information within the at least one transaction table.

6. The method according to claim 1, wherein the reference data is contained within system tables in the system database, and wherein the recording step comprises the step of recording reference data from these system tables along with a date timestamp and recording the physical file from the filestore to another location.

7. The method according to claim 1, wherein the reference data in the set of access-preservation tables in response to a retrieval request for a document on searching and selecting the required document from combined table is placed back into the required database system tables using the preserved information in the transaction, combined and access-preservation tables.

8. The method according to any preceding claim, further comprising the step of providing a graphical user interface.

9. A document management system comprising:
a system filestore comprising document data;
a system database with system tables comprising core reference data pointing to the document data in the system filestore, and supplementary document information, at least a first and a second set of access preservation tables, and a set of combination tables;
at least one database trigger configured to record core reference data that has been deleted or overwritten to the first set of access preservation tables, the recorded core reference data comprising object identification data from a first system table, version identification from a second system table and parent identification data from a third system table;
at least one stored procedure configured to obtain supplementary information related to the deleted or overwritten document from the system tables together with a timestamp, the supplementary information including a record of the complete reference information for each system table that holds any information pertaining to the document data, and to insert said supplementary information into the second set of access-preservation tables;
at least one further stored procedure configured to combine data from the first set of access-preservation tables and a subset of the supplementary information from the second set of access-preservation tables into two of the combination tables, one for deletes and one for overwrites, to point to the deleted and/or overwritten document data within the filestore; and
at least one secondary filestore or storage media to store the deleted or overwritten document data;
the document management system configured to, on request of a user, recycle the inserted, deleted and/or overwritten document data required by the user back to the system tables of the database and the system filestore and/or to a secondary archive system database and secondary archive filestore as necessary, depending on user requirements, to provide the document in the required way and version requested by the user.

10. The system according to claim 9, further comprising at least one transaction table to store all transaction and timing information to be referenced.

11. The system according to claim 10, further comprising at least one data combination means operable to combine the at least one access preservation table and the supplementary document information into the at least one transaction or combination table.

12. The system according to claim 11, further comprising at least one database procedure to store, update, retrieve transaction information within the at least one transaction table.

13. The system according to any of claims 9 to 12, further comprising a software interface configured to provide a graphical user interface.

14. A computer readable medium comprising computer code which, when executed on a computer, causes the computer to perform the method of any of claims 1 to 8 or to provide a document management system according to any of claims 9 to 12.

## Patentansprüche

1. In einem Computer durchgeführtes Verfahren zur Wiederherstellung von gelöschten und/oder überschriebenen Dokumentdaten in einem System, das eine Systemdatenbank enthält, die zusätzliche Dokumentinformationen speichert, mit Systemtabellen, die zentrale Referenzdaten enthalten, die auf die Dokumentdaten in einer Systemdateiablage verweisen, wobei das Verfahren folgende Schritte umfasst:
(a) Vermittlung, dass ein Befehl zum Einfügen, Aktualisieren oder Überschreiben ausgeführt wurde und Aufzeichnung der zentralen Referenzdaten vor dem Löschen oder Aktualisieren der Referenzdaten durch Verwendung mindestens eines Datenbanktriggers;
(b) Bereitstellung von mindestens einem ersten und zweiten Satz von Tabellen zum Erhalt des Zugriffs;
(c) Einfügen der aufgezeichneten zentralen Referenzdaten in den ersten Satz von Tabellen zum Erhalt des Zugriffs, wobei die aufgezeichneten zentralen Referenzdaten
Objektidentifizierungsdaten aus einer ersten Systemtabelle, eine Versionsidentifizierungstabelle
aus einer zweiten Systemtabelle und übergeordnete Identifikationsdaten aus einer dritten Systemtabelle für das Dokument enthalten;
(d) Nutzung der zentralen Referenzdaten aus dem ersten Satz von Tabellen zum Erhalt des Zugriffs, um zusätzliche Informationen zu dem gelöschten und/oder überschriebenen Dokument aus den Systemtabellen zusammen mit einem Zeitstempel zu erhalten, wobei die zusätzlichen Informationen eine Aufzeichnung der vollständigen Referenzinformationen für jede Systemtabelle, die Informationen in Bezug auf die Dokumentdaten enthält, enthalten;
(e) Einfügen der zusätzlichen Informationen in einen zweiten Satz von Tabellen zum Erhalt des Zugriffs;
(f) Bereitstellung eines Satzes von Kombinationstabellen und Kombinieren von Daten aus dem ersten Satz von Tabellen zum Erhalt des Zugriffs mit einem Teilsatz der zusätzlichen Informationen aus dem zweiten Satz von Tabellen zum Erhalt des Zugriffs zu zwei der Kombinationstabellen, eine für gelöschte und eine für überschriebene Daten, um auf die gelöschten und/oder überschriebenen Dokumentdaten innerhalb der Dateiablage zu verweisen;
(g) Identifizieren und Speichern der gelöschten und/oder überschriebenen Dokumentdaten auf ein Medium oder in eine separate Dateiablage bevor eine Bereinigung der Systemtabellen erfolgt;
und
(h) auf Anforderung eines Benutzers automatische Wiederherstellung der vom Benutzer benötigten, eingefügten, gelöschten und/oder überschriebenen Dokumentdaten zurück in die Systemtabellen der Datenbank und die Systemdateiablage und/oder in eine zweiten Archivsystemdatenbank und je nach Anforderungen des Benutzers gegebenenfalls eine zweite Archivdateiablage, um das Dokument auf die benötige Weise und in der vom Benutzer angeforderten Version bereitzustellen.

2. Verfahren nach Anspruch 1, das ferner den Schritt des Manipulierens der Dokumentdaten vor Wiederherstellung zurück in die Datenbanksystemtabellen umfasst.

3. Verfahren nach Anspruch 1, das ferner den Schritt des Speicherns aller Vorgangs- und Zeitinformationen, um in mindestens einer Vorgangstabelle referenziert zu werden, umfasst.

4. Verfahren nach Anspruch 3, das ferner den Schritt des Kombinierens mindestens einer Tabelle zum Erhalt des Zugriffs mit den zusätzlichen Dokumentinformationen zu der mindestens einen Vorgangs- oder Kombinationstabelle umfasst.

5. Verfahren nach Anspruch 4, das ferner den Schritt des Speicherns, Aktualisierens oder Abrufens von Vorgangsinformationen innerhalb der mindestens einen Verfahrenstabelle umfasst.

6. Verfahren nach Anspruch 1, wobei die Referenzdaten innerhalb von Systemtabellen in der Systemdatenbank enthalten sind und wobei der Aufzeichnungsschritt den Schritt der Aufzeichnung von Referenzdaten aus diesen Systemtabellen zusammen mit einem Datenzeitstempel und der Aufzeichnung der physikalischen Datei aus der Dateiablage an einem anderen Ort umfasst.

7. Verfahren nach Anspruch 1, wobei die Referenzdaten im Satz von Tabellen zum Erhalt des Zugriffs im Anschluss an eine Abrufanforderung für ein Dokument nach Suchen und Auswahl des erforderlichen Dokuments aus der kombinierten Tabelle durch Nutzung der erhaltenen Informationen in der Vorgangstabelle, der kombinierten Tabelle und den Tabellen zum Erhalt des Zugriffs in die erforderlichen Datenbanksystemtabellen zurückgebracht wird.

8. Verfahren nach einem der vorangehenden Ansprüche, das ferner den Schritt des Bereitstellens einer grafischen enutzeroberfläche umfasst.

9. Dokumentenmanagementsystem, das folgendes umfasst:
eine Systemdateiablage, die Dokumentdaten enthält;
eine Systemdatenbank **mit Systemtabellen,** die zentrale Referenzdaten, die auf die Dokumentdaten in der Systemdateiablage verweisen und zusätzliche Dokumenteninformationen, mindestens einen ersten und einen zweiten Satz von Tabellen zum Erhalt des Zugriffs und einen Satz Kombinationstabellen enthält,
mindestens einen Datenbanktrigger, der zur Aufzeichnung zentraler Referenzdaten, die gelöscht oder überschrieben wurden, im ersten Satz von Tabellen zum Erhalt des Zugriffs konfiguriert ist, wobei die aufgezeichneten zentralen Referenzdaten eine Cibjektidentifikation aus einer ersten Systemtabelle, eine Versionsidentifikation aus einer zweiten Systemtabelle und übergeordnete Identifizierungsdaten aus einer dritten Systemtabelle umfassen;
mindestens ein gespeichertes Verfahren, das zum Erhalt zusätzlicher Informationen zu dem gelöschten und/oder überschriebenen Dokument aus den Systemtabellen zusammen mit einem Zeitstempel, wobei die zusätzlichen Informationen eine Aufzeichnung der vollständigen Referenzinformationen für jede Systemtabelle, die Informationen in Bezug auf die Dokumentdaten enthält, enthalten und zum Einfügen der besagten Informationen in den zweiten Satz von Tabellen zum Erhalt des Zugriffs konfiguriert ist;
mindestens ein weiteres gespeichertes Verfahren, das zur Kombination von Daten aus dem ersten Satz von Tabellen zum Erhalt des Zugriffs mit einem Teilsatz der zusätzlichen Informationen aus dem zweiten Satz von Tabellen zum Erhalt des Zugriffs zu zwei der Kombinationstabellen, eine für gelöschte und eine für überschriebene Daten, um auf die gelöschten und/oder überschriebenen Dokumentdaten innerhalb der Dateiablage zu verweisen, konfiguriert ist; und mindestens eine zweite Dateiablage oder ein Speichermedium zur Speicherung der gelöschten oder überschriebenen Dokumentdaten;
das Dokumentenmanagementsystem, das zur Wiederherstellung auf Anforderung eines Benutzers der vom Benutzer benötigten, eingefügten, gelöschten und/oder überschriebenen Dokumentdaten zurück in die Systemtabellen der Datenbank und die Systemdateiablage und/oder in eine zweiten Archivsystemdatenbank und je nach Anforderungen des Benutzers gegebenenfalls eine zweite Archivdateiablage, um das Dokument auf die benötige Weise und in der vom Benutzer angeforderten Version bereitzustellen, konfiguriert ist.

10. System nach Anspruch 9, das ferner mindestens eine Vorgangstabelle zur Speicherung aller zu referenzierenden Vorgangs- und Zeitinformationen umfasst.

11. System nach Anspruch 10, das ferner mindestens ein Datenkombinationsmittel, das zur Kombination mindestens einer Tabelle zum Erhalt des Zugriffs mit den zusätzlichen Dokumentinformationen zu der mindestens einen Vorgangs- oder Kombinationstabelle betreibbar ist, umfasst.

12. System nach Anspruch 11, das ferner mindestens ein Datenbankverfahren zum Speichern, Aktualisieren und Abrufen von Vorgangsinformationen innerhalb der mindestens einen Vorgangstabelle umfasst.

13. System nach einem der Ansprüche 9 bis 12, das ferner eine Softwareschnittstelle, die zur Bereitstellung einer grafischen Benutzerschnittstelle konfiguriert ist, umfasst.

14. Computerlesbares Medium, das einen Computercode umfasst, der bei Ausführung auf einem Computer den Computer dazu veranlasst, die Methode eines der Ansprüche 1 bis 8 auszufügen oder ein Dokumentenmanagement nach einem der Ansprüche 9 bis 12 bereitzustellen.

## Revendications

1. Procédé mis en oeuvre dans un ordinateur pour le recyclage des données des documents supprimées et/ou écrasées dans un système contenant une base de données de système où sont stockées des informations complémentaires sur les documents, avec des tables de système comprenant des données de référence fondamentales associées aux données des documents dans un entreposage de fichiers du système. Ce procédé est composé des étapes suivantes :
a) déterminer qu'une opération de saisie, de mise à jour, de suppression ou d'écrasement a été effectuée et enregistrer les données de référence fondamentales préalables à la suppression ou à la mise à jour des données de référence moyennant l'utilisation d'au moins un déclencheur de base de données ;
b) fournir au moins un premier et un second ensemble de tables de protection de l'accès ;
c) insérer les données de référence de base enregistrées dans le premier ensemble des tables de protection de l'accès. Les données de référence de base comprennent, pour le document, les données d'identification de l'objet à partir d'une première table du système, une table d'identification de la version à partir d'une seconde table de système et les données d'identification principales à partir d'une troisième table de système ;
d) utiliser les données de référence de base du premier jeu des tables de protection de l'accès pour obtenir des informations supplémentaires relatives au document supprimé et/ou écrasé à partir des tables du système, avec notamment les données de l'horodatage. Les données supplémentaires comprennent un enregistrement des informations de référence complètes pour chaque table de système qui contient des informations relatives aux données des documents ;
e) introduire les informations supplémentaires dans un deuxième ensemble de tables de protection de l'accès ;
(f) fournir un ensemble de tables de combinaison et des données de combinaison issues de la première série de tables de protection de l'accès et un sous-ensemble des informations supplémentaires issues du second ensemble de tables de protection de l'accès dans deux des tables de combinaison, l'une étant utilisée pour les suppressions et l'autre pour les écrasements, afin d'identifier les données de document supprimées et/ou écrasées dans le système d'entreposage des fichiers ;
(g) identifier et stocker les données de document supprimées et/ou écrasées sur des supports ou dans un système d'entreposage de fichiers séparé, avant qu'un nettoyage des tables dus système ne soit effectué ; et
(h) sur demande d'un utilisateur, recycler automatiquement les données de document insérées, supprimées et/ou écrasées que l'utilisateur demande de réintégrer dans les tables du système de la base de données et dans le système d'entreposage de fichiers et/ou dans une seconde base de données de système d'archives et un système d'entreposage d'archives secondaire si nécessaire, suivant les exigences de l'utilisateur, afin de fournir le document sous le format et la version demandés par l'utilisateur.

2. Le procédé suivant Requête 1 comprend également l'étape de manipulation des données des documents préalablement à leur recyclage et réintégration dans les tables de système de la base de données.

3. Le procédé suivant Requête 1 comprend également l'étape de stockage de toutes les données relatives aux transactions et à la chronologie et qui doivent être consignées dans une table de transactions au moins.

4. Le procédé suivant Requête 3 comprend également l'étape de combinaison d'au moins une table de protection de l'accès et des informations supplémentaires des documents dans au moins une table de transactions ou de combinaison.

5. Le procédé suivant Requête 4 comprend également le stockage, la mise à jour ou la récupération des informations de transaction dans au moins une table de transaction.

6. Le procédé suivant Requête 1, dans lequel les données de référence sont stockées dans les tables de système dans la base de données du système, et où l'étape d'enregistrement comprend l'étape d'enregistrement des données de référence de ces tables de système avec relevé de la date et l'enregistrement du fichier physique depuis l'entreposage des fichiers dans un autre emplacement.

7. Le procédé suivant Requête 1, dans lequel les données de référence stockées dans les tables de protection de l'accès sont placées, en réponse à une demande de récupération d'un document et lors de la recherche et de la sélection du document sollicité, depuis la table combinée dans le système de la base de données requis en utilisant les informations maintenues dans les tables de protection de l'accès, les tables de transactions et les tables combinées.

8. Le procédé suivant toute Requête précédente, qui comprend également l'étape consistant à fournir une interface utilisateur graphique.

9. Un système de gestion de documents comprenant:
un système d'entreposage de fichiers comprenant des données de documents ;
une base de données du système avec les tables de système comprenant les données de référence de base associées aux données des documents dans le système d'entreposage de fichiers du système et les informations supplémentaires des documents, au moins un premier et un second ensemble de tables de protection de l'accès, et un ensemble de tables de combinaison ;
au moins un déclencheur de base de données configuré pour enregistrer les données de référence fondamentales qui ont été supprimées ou remplacées dans la première série de tables de protection de l'accès, les données de référence de base enregistrées et comprenant les données d'identification de l'objet d'une première table de système,
l'identification de la version d'une seconde table de système et les données d'identification principales d'une troisième table de système ;
au moins une procédure enregistrée et configurée pour obtenir des informations supplémentaires associées au document supprimé ou remplacé à partir des tables de système et avec un relevé d'horodatage - les informations supplémentaires comprennent un registre des données de référence complètes pour chaque table de système qui contient des informations relatives aux données de document - et pour insérer lesdites informations supplémentaires dans le second ensemble de tables de protection de l'accès ;
au moins une autre procédure enregistrée et configurée pour combiner les données de la première série de tables de protection de l'accès et d'un sous-ensemble contenant les informations supplémentaires de la seconde série de tables de protection de l'accès dans deux des tables de combinaison, l'une étant utilisée pour les suppressions et l'autre pour les remplacements, afin d'identifier les données de document supprimées et/ou remplacées dans le système d'entreposage des fichiers ; et
au moins un système secondaire d'entreposage des fichiers ou de support multimédia pour le stockage des données de document supprimées ou remplacées ;
le système de gestion des documents configuré pour recycler, sur demande d'un utilisateur, les données de document insérées, supprimées et/ou écrasées et les réintégrer, suivant les demandes de l'utilisateur, dans les tables de système de la base de données et dans le système d'entreposage des fichiers et/ou dans une base de données de système d'archivage secondaire et un système d'entreposage de fichiers secondaire suivant les besoins, en fonction des exigences des utilisateurs, afin de fournir le document sous le format et la version sollicités par l'utilisateur,

10. Le système suivant Requête 9, comprenant également au moins une table de transactions pour enregistrer toutes les données des transactions, ainsi que leurs données d'horodatage.

11. Le système suivant Requête 10, comprenant également au moins un outil de combinaison des données permettant de combiner au moins une table de protection de l'accès et les données complémentaires des documents dans au moins une table de transactions ou de combinaison.

12. Le système suivant Requête 11, comprenant également au moins une procédure de base de données pour enregistrer, mettre à jour, extraire les informations de transaction stockées dans au moins une table de transactions.

13. Le système suivant l'une quelconque des Requêtes de 9 à 12, comprenant une interface logicielle configurée pour fournir une interface utilisateur graphique.

14. Un support lisible par ordinateur comprenant le code informatique qui, lorsqu'il est exécuté sur un ordinateur, donne lieu à l'exécution par ledit ordinateur de la méthode de l'une quelconque des requêtes de 1 à 8 ou à la prestation d'un système de gestion des documents selon l'une quelconque des requêtes de 9 à 12.
